# FASCICULE DE BREVET EUROPEEN

(11) **EP 1 774 215 B1**
(45) Date de publication et mention de la délivrance du brevet: **11.04.2012**
(21) Numéro de dépôt: 05773271.1
(22) Date de dépôt: 19.05.2005
(51) Int. Cl.: F16L 9/19, F16L 59/147

(54) **DISPOSITIF DE CALORIFUGE ACTIF POUR TUYAUTERIE DE GAZ**
AKTIVE WÄRMEISOLIERENDE VORRICHTUNG FÜR GASLEITUNGEN
ACTIVE THERMAL INSULATING DEVICE FOR GAS PIPING

(30) Priorité: 19.05.2004 FR 0405455
(43) Date de publication de la demande: 18.04.2007
(73) Titulaire: Etat Français représenté par le Délégué Général pour L'Armement, 94114 Arcueil Cedex (FR)
(72) Inventeur: FOATA, Antoine, F-91200 Athis-Mons (FR)
(86) Numéro de dépôt international: PCT/FR2005/001253
(87) Numéro de publication internationale: WO 2005/114021

(56) Documents cités:
- FR-A- 1 276 867
- GB-A- 743 504
- US-A- 2 468 902
- US-A- 3 301 320

## Description

La présente invention a pour objet un dispositif de calorifugeage actif pour tuyauteries de gaz, en particulier pour des tuyauteries d'air à haute température et forte pression.

Ce type de tuyauterie est utilisé, notamment, pour l'alimentation de bancs d'essais d'altitude simulée. Ces bancs permettent de reproduire les conditions de vol pour tester des pièces d'aéronefs, notamment des moteurs. La mise en oeuvre de ce type d'essais nécessite une alimentation en air à des températures de l'ordre de 800°C et à une pression pouvant atteindre 60 bars.

Ces bancs d'essais sont généralement placés dans des caissons. La production et le chauffage du gaz d'alimentation sont indépendants du caisson, il est donc acheminé par des tuyauteries depuis les équipements de l'unité de production jusqu'au caisson, en passant par les équipements de l'unité de chauffage.

Dans ces conditions de service extrêmes le transfert du gaz nécessite des tuyauteries calorifugées afin d'éviter les déperditions thermiques et de minimiser les contraintes thermiques sur le tube extérieur pour une résistance mécanique accrue. Le calorifuge permet également d'apporter une protection contre les risques de brûlure du personnel.

Pour cela, la technique couramment utilisée dans l'industrie consiste à utiliser un tube à double paroi dont la paroi intérieure en métal est de faible épaisseur ; un isolant de type laine de roche ou fibre de céramique est placé entre le tube extérieur et la paroi intérieure. Cette dernière se trouve en équipression avec la pression du gaz véhiculé. Ce phénomène d'équipression est réalisé grâce à des trous d'équilibrage, qui sont, en réalité, des trous sur la paroi intérieure associés à des grilles, ces dernières ayant pour fonction d'éviter le passage d'isolant vers le circuit de gaz.

Dans ce cadre, on connaît le brevet US2468902 qui décrit un dispositif de calorifugeage d'un conduit intérieur ayant des trous d'équilibrage, ce dispositif comportant un conduit intermédiaire possédant lui-même des trous d'équilibrage et un tube extérieur, un isolant, tel par exemple que de la laine de roche, étant inséré entre le conduit intermédiaire et le tube extérieur.

Malgré le fait que la technique décrite précédemment soit simple et très répandue dans l'industrie, elle présente un certain nombre d'inconvénients, notamment le fait que l'isolant a tendance à perdre de son efficacité au cours du temps du fait des hautes températures rencontrées. Il a tendance à se désagréger et à passer au travers des trous d'équilibrage et, à terme, pollue le réseau et détériore rapidement les différents équipements situés en aval.

De plus, la condensation présente entre le tube externe et le conduit intermédiaire entraîne une modification chimique de certains isolants, qui ensuite n'assurent plus leur fonction.

Ce dispositif présente également l'inconvénient de posséder une certaine inertie : il impose des temps de montée et de descente en pression et en température non négligeables, de façon à minimiser les contraintes appliquées sur le tube. En effet, en cas de variation brutale des conditions, le conduit interne a tendance à imploser.

Pour résoudre une partie de ces problèmes, le brevet US3301320 décrit une tuyauterie pour contenir des gaz corrosifs, chauds et sous pression, comportant, en coupe et en partant de son axe de révolution, une couche tubulaire interne réfractaire et thermiquement isolante, un tube interne, un chemisage renfermant des tubes de refroidissement, une couche externe thermiquement isolante et un tube externe.

Il est en outre indiqué, d'une part, qu'un gaz non corrosif est injecté dans le chemisage à une pression légèrement supérieure à celle du gaz corrosif et, d'autre part, que le tube interne peut comporter quelques petits trous pour éviter une surcharge excessive de ce tube en permettant une diffusion du gaz non corrosif entre ce tube et la couche tubulaire interne thermiquement isolante.

Un tel dispositif présente plusieurs inconvénient. Ainsi, il nécessite l'utilisation d'un second gaz à une pression supérieure à celle du gaz situé dans la veine ce qui, d'une part, complique le dispositif et, d'autre part, soumet le tube externe à une pression supérieure à celui de la veine ce qui nécessite son surdimensionnement. De plus, une couche tubulaire interne réfractaire et thermiquement isolante a tendance à perdre de son efficacité au cours du temps du fait des hautes températures rencontrées et a tendance à se désagréger directement dans le gaz corrosif, ce qui pollue le réseau et détériore rapidement les différents équipements situés en aval.

Le but de la présente invention est de remédier aux inconvénients précités en proposant un dispositif de calorifugeage actif pour tuyauterie de gaz, notamment d'air, stable dans le temps, et ne présentant plus aucun risque de pollution.

Un autre but de l'invention est de présenter un dispositif possédant un conduit intérieur à faible inertie permettant des temps de montée et de descente en pression et en température immédiats.

Pour ce faire, l'invention a pour objet un dispositif de calorifugeage actif pour tuyauterie de gaz selon la revendication 1.

Selon une caractéristique particulière, les tubes sont reliés par des lames intérieures et extérieures, ces dernières permettent d'augmenter la surface d'échange thermique et d'apporter une meilleure rigidité du faisceau de tubes.

Le liquide de refroidissement est, de préférence, de l'eau à une température inférieure à 50 degrés.

Le gaz présent entre le faisceau de tubes et le conduit intérieur, en équipression avec celui circulant dans ce dernier, peut-être apte à isoler thermiquement le tube extérieur.

Ainsi, selon une caractéristique particulière permettant d'accroître les performances du calorifugeage, la section de passage totale des tubes du faisceau est supérieure ou égale à la section totale de passage du gaz entre le conduit intérieur et le tube extérieur.

De préférence, le conduit intérieur est composé d'un matériau réfléchissant.

Le dispositif peut comporter un moyen de drainage apte à évacuer les condensats présents entre le tube extérieur et le conduit intérieur.

De préférence, le moyen de drainage comporte une vanne quart de tour.

Le tube extérieur et le conduit intérieur peuvent comporter des moyens de raccordement à un autre dispositif de calorifugeage ou à un équipement.

Ce dispositif de calorifugeage actif pour tuyauterie de gaz présente l'avantage de supprimer l'utilisation d'isolants polluants pour le réseau.

Un autre avantage réside dans la stabilité du calorifugeage dans le temps.

Le dispositif présente également l'avantage de comporter un conduit intérieur à faible inertie thermique, ce qui engendre un meilleur rendement de l'installation.

Un autre avantage lié à la faible inertie thermique du conduit intérieur est celui de permettre une simulation des conditions de vol transitoire, car elles sont associées à des variations brutales de pression et de température.

D'autres caractéristiques et avantages de l'invention apparaîtront dans la description détaillée, non limitative, ci-dessous.

Cette description sera faite en regard des dessins annexés parmi lesquels :
- la figure 1 représente une vue éclatée du dispositif de calorifugeage actif ;
- la figure 2 représente une coupe transversale du dispositif ;

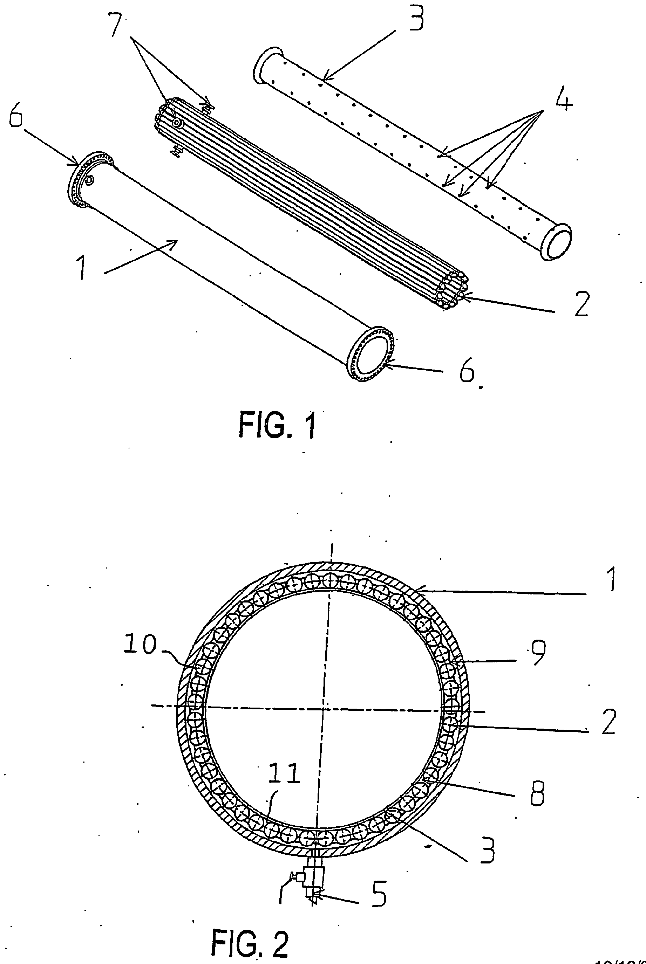

En référence aux figures 1 et 2, on voit un dispositif de calorifugeage actif pour tuyauterie de gaz. L'assemblage de plusieurs dispositifs de ce type permet de composer un réseau de tuyauteries calorifugées.

Ce dispositif se compose d'un conduit intérieur 3 dont la paroi est de faible épaisseur et où circule un gaz à transférer. Il comporte une multitude de trous d'équilibrage 4 permettant de mettre l'espace entre le conduit intérieur 3 et un tube extérieur 1 à la même pression que le gaz à transférer.

Le conduit intérieur 3 est constitué d'un matériau permettant de réfléchir une grande partie du flux de chaleur, comme l'aluminium ou le nickel, de façon à casser le transfert de chaleur par rayonnement.

Un faisceau de tubes 2, reliés par des lames intérieures 8 et extérieures 9, est disposé autour du conduit intérieur 3. Il comporte des tubulures d'entrée et de sortie 7 destinées à l'alimentation et au refoulement du liquide de refroidissement, notamment de l'eau, qui permet l'évacuation de calories.

L'ensemble composé par le conduit intérieur 3 et le faisceau de tubes 2 est logé dans le tube extérieur 1 qui comporte, à chaque extrémité, une bride de raccordement 6 destinée à l'assemblage de plusieurs dispositifs de calorifugeage selon l'invention ou à la connexion à un équipement, non représenté sur les figures.

Dans cet exemple de réalisation, la section totale des tubes 2 du faisceau est supérieure ou égale à la section totale de passage du gaz entre le conduit intérieur et le tube extérieur. En d'autres termes, la somme des sections individuelles de passage 10 des tubes 2 est supérieure à la somme des sections libres 11 délimitées par deux tubes 2 adjacents, le tube extérieur 1 et le conduit intérieur 3. Ainsi les mouvements de convection du gaz situé entre le conduit interne et le tube extérieur sont minimisés alors que le refroidissement de cette partie du gaz est maximisé.

Le tube extérieur 1 comporte un moyen de drainage 5 composé d'un tube de petit diamètre et d'une vanne quart de tour.

Le principe du calorifugeage selon cet exemple de réalisation est le suivant : le gaz à transférer sort d'une unité de chauffage (non représentée) à une température de l'ordre de 800°C et à une pression d'environ 60 bars. Il circule dans le conduit intérieur 3 et une partie de ce gaz passe par les trous d'équilibrage 4 et se propage dans l'espace entre le faisceau de tubes 2, le tube extérieur 1 et le conduit intérieur 3, mettant ainsi cet espace et l'intérieur du conduit intérieur 3 en équipression. Le gaz est refroidi au contact du faisceau de tubes 2 remplis d'eau de refroidissement à 45°. Le circuit de refroidissement est alimenté en permanence de façon à maintenir et contrôler la température de l'eau circulant dans le faisceau. Ainsi, on obtient une température de la paroi du tube extérieur 1 proche de la température du liquide de refroidissement lorsque du gaz à 800° degrés circule dans le conduit intérieur 3.

Les conditions atmosphériques étant différentes de celle résidant dans le tube extérieur, on observe un phénomène de condensation, les condensats peuvent être éliminés en actionnant la vanne quart de tour du moyen de drainage 5 situé en point bas du réseau de tuyauterie. Bien évidemment de nombreuses modifications peuvent être apportées à l'exemple de réalisation décrit sans sortir du cadre de l'invention. Ainsi le faisceau de tubes peut être disposé autrement que longitudinalement comme montré sur les figures 1 et 2 ou être constitué par un ou plusieurs tubes disposés en spirale autour du conduit intérieur.

## Revendications

1. Dispositif de calorifugeage actif pour tuyauterie de gaz à haute température et forte pression, comportant un tube extérieur (1), un tube intérieur (3) comprenant des trous d'équilibrage (4) de ce tube aptes à permettre le passage d'une partie dudit gaz entre le tube extérieur (1) et le tube intérieur (3) afin d'équilibrer la pression de part et d'autre du tube intérieur (3), ainsi qu'un faisceau de tubes (2) placés entre le tube extérieur (1) et le tube intérieur (3) et aptes à véhiculer un liquide de refroidissement, (3) **caractérisé en ce que** le tube comportant les trous d'équilibrage forme le conduit le plus intérieur du dispositif, la paroi interne de ce tube définissant une chambre sous la forme d'une cavité apte à transférer ledit gaz à haute température et forte pression.

2. Dispositif selon la revendication 1, **caractérisé en ce que** les trous d'équilibrage débouchent dans ladite chambre et dans l'espace situé entre le tube extérieur et le conduit intérieur.

3. Dispositif selon la revendication 1, **caractérisé en ce que** le liquide de refroidissement est de l'eau à une température inférieure à 50 degrés.

4. Dispositif selon l'une quelconque des revendications précédentes, **caractérisé en ce que** la partie du gaz présente entre le tube extérieur (1) et le conduit intérieur (3), en équipression avec celle circulant dans ce dernier, est apte à isoler thermiquement le tube extérieur (1).

5. Dispositif selon l'une quelconque des revendication précédentes, **caractérisé en ce que** la section totale de passage des tubes (2) du faisceau est supérieure ou égale à la section totale de passage du gaz entre le conduit intérieur (3) et le tube extérieur (1).

6. Dispositif selon l'une quelconque des revendications précédentes, **caractérisé en ce que** le conduit intérieur (3) est composé d'un matériau réfléchissant.

7. Dispositif selon l'une quelconque des revendications précédentes, **caractérisé en ce qu'**il comporte un moyen de drainage (5) apte à évacuer les condensats présents entre le tube extérieur (1) et le conduit intérieur (3).

8. Dispositif selon la revendication 7, **caractérisé en ce que** le moyen de drainage (5) comporte une vanne quart de tour.

9. Dispositif selon l'une quelconque des revendications précédentes, **caractérisé en ce que** le tube extérieur (1) comporte des moyens de raccordement (6) à un autre dispositif de calorifugeage ou à un équipement.

10. Dispositif selon l'une quelconque des revendications précédentes, **caractérisé en ce que** le conduit intérieur (3) comporte des moyens de raccordement (6) à un autre dispositif de calorifugeage ou un à équipement.

## Claims

1. An active thermal insulating device for high temperature and high pressure gas piping, comprising an outer tube (1), an inner tube (3) comprising said tube equalizing holes (4) suitable for allowing the passing of a part of said gas between the outer tube (1) and the inner tube (3) to equalize the pressure on both sides of the inner tube (3), as well as a bundle of tubes (2) arranged between the outer tube (1) and the inner tube (3) and suitable for carrying a cooling liquid, (3) **characterized in that** the tube provided with the equalizing holes forms the innermost duct of the device, the inner wall of this tube delimiting a chamber in the form of a cavity suitable for transferring said high temperature and high pressure gas.

2. Device according to claim 1, **characterized in that** the equalizing holes open in said chamber and in the space located between the outer tube and the inner duct.

3. Device according to claim 1, **characterised in that** the cooling liquid is water at a temperature below 50 degrees.

4. Device according to any one of the preceding claims, **characterized in that** the part of the gas present between the outer tube (1) and the inner duct (3), at the same pressure as the one circulating in the latter, is suitable for thermal insulating the outer tube (1).

5. Device according to any one of the preceding claim, **characterized in that** the total flow area of the tubes (2) of the bundle is higher than or the same as the total flow area for the passing of the gas between the inner duct (3) and the outer tube (1).

6. Device according to any one of the preceding claims, **characterized in that** the inner duct (3) is composed of a reflective material.

7. Device according to any one of the preceding claims, **characterized in that** it is provided with a draining means (5) suitable for evacuating the condensates present between the outer tube (1) and the inner duct (3).

8. Device according to any one of the preceding claims, **characterized in that** the draining means (5) is provided with a quarter-turn valve.

9. Device according to any one of the preceding claims, **characterized in that** the outer tube (1) is provided with means (6) for connection to another thermal insulating device or to an equipment.

10. Device according to any one of the preceding claims, **characterized in that** the inner duct (3) is provded with means (6) for connection to another thermal insulating device or to an equipment.

## Patentansprüche

1. Aktive wärmeisolierende Vorrichtung für Hochtemperatur- und Hochdruck-Gasleitungen, die ein äußeres Rohr (1), ein inneres Rohr (3), das Ausgleichslöcher (4) dieses Rohrs umfasst, die dafür geeignet sind, einen Teil des Gases zwischen dem äußeren Rohr (1) und dem inneren Rohr (3) strömen zu lassen, um den Druck auf beiden Seiten des inneren Rohrs (3) auszugleichen, sowie ein Rohrbündel (2) aufweist, das zwischen dem äußeren Rohr (1) und dem inneren Rohr (3) angeordnet ist und dafür geeignet ist, eine Kühlflüssigkeit zu transportieren, **dadurch gekennzeichnet, dass** das Rohr, das die Ausgleichslöcher aufweist, die innerste Leitung der Vorrichtung bildet, wobei die Innenwand dieses Rohrs eine Kammer in Form eines Hohlraums definiert, der dafür geeignet ist, das Hochtemperatur- und Hochdruckgas zu transportieren.

2. Vorrichtung nach Anspruch 1, **dadurch gekennzeichnet, dass** die Ausgleichslöcher in die Kammer und in den Zwischenraum zwischen dem äußeren Rohr und der inneren Leitung münden.

3. Vorrichtung nach Anspruch 1, **dadurch gekennzeichnet, dass** die Kühlflüssigkeit Wasser mit einer Temperatur von unter 50 Grad ist.

4. Vorrichtung nach einem der vorhergehenden Ansprüche, **dadurch gekennzeichnet, dass** der Teil des Gases zwischen dem äußeren Rohr (1) und der inneren Leitung (3), mit demselben Druck wie dem Teil, der in letzterer strömt, dafür geeignet ist, das äußere Rohr (1) thermisch zu isolieren.

5. Vorrichtung nach einem der vorhergehenden Ansprüche, **dadurch gekennzeichnet, dass** der Gesamtströmungsquerschnitt der Rohre (2) des Bündels größer als der oder gleich dem Gesamtströmungsquerschnitt des Gases zwischen der inneren Leitung (3) und dem äußeren Rohr (1) ist.

6. Vorrichtung nach einem der vorhergehenden Ansprüche, **dadurch gekennzeichnet, dass** die innere Leitung (3) aus einem reflektierenden Material besteht.

7. Vorrichtung nach einem der vorhergehenden Ansprüche, **dadurch gekennzeichnet, dass** sie ein Ablaufmittel (5) aufweist, das dafür geeignet ist, Kondensat, das zwischen dem äußeren Rohr (1) und der inneren Leitung (3) vorhanden ist, abzuleiten.

8. Vorrichtung nach Anspruch 7, **dadurch gekennzeichnet, dass** das Ablaufmittel (5) ein Vierteldrehungsventil aufweist.

9. Vorrichtung nach einem der vorhergehenden Ansprüche, **dadurch gekennzeichnet, dass** das äußere Rohr (1) Mittel zum Verbinden (6) mit einer weiteren wärmeisolierenden Vorrichtung oder mit einer Einrichtung aufweist.

10. Vorrichtung nach einem der vorhergehenden Ansprüche, **dadurch gekennzeichnet, dass** die innere Leitung (3) Mittel zum Verbinden (6) mit einer weiteren wärmeisolierenden Vorrichtung oder mit einer Einrichtung aufweist.
